# EUROPEAN PATENT SPECIFICATION

(11) **EP 4 180 241 B1**
(45) Date of publication and mention of the grant of the patent: **23.10.2024**
(21) Application number: 22206279.6
(22) Date of filing: 09.11.2022
(51) Int. Cl.: B60C 9/20, B60C 9/18

(54) **HEAVY DUTY PNEUMATIC TIRE**
SCHWERLASTLUFTREIFEN
PNEUMATIQUE POUR POIDS LOURDS

(30) Priority: 10.11.2021 JP 2021183358; 09.02.2022 JP 2022018781
(43) Date of publication of application: 17.05.2023
(73) Proprietor: Sumitomo Rubber Industries, Ltd., Kobe-shi, Hyogo 651-0072 (JP)
(72) Inventor: OKABE, Taro, Kobe-shi, 651-0072 (JP)
(74) Representative: Manitz Finsterwald Patent- und Rechtsanwaltspartnerschaft mbB

(56) References cited:
- EP-A1- 0 627 331
- EP-A2- 1 800 903
- WO-A1-2015/197298
- JP-A- 2001 180 221
- JP-A- 2017 056 813
- KR-A- 20130 077 412

## Description

### BACKGROUND OF THE INVENTION

### Field of the Invention

The present invention relates to a heavy duty pneumatic tire.

### Background Art

The tread portion of a heavy duty pneumatic tire (hereinafter, referred to as a tire) is provided with a pair of cushion layers. The pair of cushion layers are disposed so as to be spaced apart from each other in the axial direction. Each cushion layer is located between an end of a belt and a carcass.

When the tire runs, strain occurs in a portion at each end of the belt. Various studies have been conducted for the cushion layers in order to prevent damage due to such strain (for example, Japanese Laid-Open Patent Publication No. 2015-209166).

The pair of cushion layers are independent of each other. The positions of the cushion layers are likely to be shifted relative to the equator plane. The position shift may influence the shape balance of a ground-contact surface, causing a decrease in uneven wear resistance.

Against the backdrop of the tightening of environmental regulations and driver shortages in recent years, vehicles such as trucks and buses have increased load capacities and decreased floor heights. Accordingly, the demand for low-flatness tires has increased.

In a low-flatness tire, it is structurally more difficult to ensure a space for disposing cushion layers, than in a high-flatness tire. If cushion layers having conventional specifications are used in a low-flatness tire, each end of a belt may be raised when the tire expands. In the low-flatness tire, the internal pressure distributed to the belt is larger than in the high-flatness tire. In the low-flatness tire, a significant change of the ground-contact shape due to dimensional growth may occur. The ground-contact shape that lacks stability leads to a decrease in uneven wear resistance.

In a tire, the load acting on the tread portion is reduced by bending of each side portion. The bending allowance of a low-flatness tire is smaller than that of a high-flatness tire. In the low-flatness tire, the degree of contribution of each side portion to reduction of the load acting on the tread portion is low. In the low-flatness tire, a larger load acts on the tread portion than in the high-flatness tire. The larger load may lead to a decrease in durability or uneven wear resistance.

A heavy duty pneumatic tire known from KR 2013 0077412 A is described in the preamble of claim 1. Further heavy duty tires are known from JP 2017 056813 A, WO 2015/197298 A1, EP 1 800 903 A2, JP 2001 180221 A and EP 0 627 331 A1.

The present invention has been made in view of such circumstances. An object of the present invention is to provide a heavy duty pneumatic tire that can achieve stabilization of a ground-contact shape and reduction of a load acting on a tread portion.

### SUMMARY OF THE INVENTION

The present invention provides a heavy duty pneumatic tire as defined in claim 1. Dependent claims 2 to 8 are directed to preferable embodiments thereof.

Preferably, in the heavy duty pneumatic tire, each hump portion has an apparent maximum thickness of not less than 2.5 mm and not greater than 6.5 mm.

Preferably, in the heavy duty pneumatic tire, the sheet portion has an apparent thickness of not less than 1.7 mm and not greater than 2.3 mm.

Preferably, in the heavy duty pneumatic tire, a ratio of the apparent maximum thickness of each hump portion to the apparent thickness of the sheet portion is not less than 1.1 and not greater than 3.8.

Preferably, in the heavy duty pneumatic tire, a belt cord included in the fourth belt ply is a steel cord composed of a single elemental wire.

Preferably, in the heavy duty pneumatic tire, the belt cord included in the fourth belt ply has an outer diameter of not less than 0.6 mm and not greater than 0.8 mm.

Preferably, in the heavy duty pneumatic tire, the belt cord included in the fourth belt ply has a breaking load of not less than 1000 N and not greater than 1600 N.

Preferably, in the heavy duty pneumatic tire, the belt cord included in the fourth belt ply is thinner than a belt cord included in the third belt ply. A ratio of the outer diameter of the belt cord included in the fourth belt ply to an outer diameter of the belt cord included in the third belt ply is not less than 0.40 and not greater than 0.60.

According to the present invention, a heavy duty pneumatic tire that can achieve stabilization of a ground-contact shape and reduction of a load acting on a tread portion, is obtained.

### BRIEF DESCRIPTION OF THE DRAWINGS

FIG. 1 is a cross-sectional view showing a part of a heavy duty pneumatic tire according to an embodiment of the present invention;
FIG. 2 is a schematic diagram illustrating the configuration of a reinforcing layer;
FIG. 3 is an enlarged cross-sectional view showing a part of the tire in FIG. 1;
FIG. 4 is an enlarged cross-sectional view showing a part of the tire shown in FIG. 3;
FIG. 5 is an enlarged cross-sectional view showing a part of the tire shown in FIG. 3;
FIG. 6 is a cross-sectional view of a belt cord included in a third belt ply; and
FIG. 7 is a cross-sectional view of a belt cord included in a fourth belt ply.

### DETAILED DESCRIPTION

Hereinafter, the present invention will be described in detail based on preferred embodiments with appropriate reference to the drawings.

In the present disclosure, a state where a tire is fitted on a normal rim, the internal pressure of the tire is adjusted to a normal internal pressure, and no load is applied to the tire is referred to as a normal state.

In the present disclosure, unless otherwise specified, the dimensions and angles of each component of the tire are measured in the normal state.

The dimensions and angles of each component in a meridian cross-section of the tire, which cannot be measured in a state where the tire is fitted on the normal rim, are measured in a cross-section of the tire obtained by cutting the tire along a plane including a rotation axis, with the distance between right and left beads being made equal to the distance between the beads in the tire that is fitted on the normal rim.

The normal rim means a rim specified in a standard on which the tire is based. The "standard rim" in the JATMA standard, the "Design Rim" in the TRA standard, and the "Measuring Rim" in the ETRTO standard are normal rims.

The normal internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures.

A normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads.

In the present disclosure, the "nominal aspect ratio" is the "nominal aspect ratio" included in "tyre designation" specified in JIS D4202 "Automobile tyres-Designation and dimensions".

In the present disclosure, a tread portion of the tire is a portion of the tire that comes into contact with a road surface. A bead portion is a portion of the tire that is fitted to a rim. A side portion is a portion of the tire that extends between the tread portion and the bead portion. The tire includes a tread portion, a pair of bead portions, and a pair of side portions as portions thereof.

In the present disclosure, the number of cords included per 5 cm of a tire element, including aligned cords, is represented as the density of cords included in this element (unit: ends/5 cm). Unless otherwise specified, the density of the cords is obtained in a cross-section of the element obtained by cutting the element along a plane perpendicular to the longitudinal direction of the cords.

In the present disclosure, a crosslinked rubber refers to a molded product, of a rubber composition, obtained by pressurizing and heating the rubber composition. The rubber composition is an uncrosslinked rubber obtained by mixing a base rubber and chemicals in a kneading machine such as a Banbury mixer. The crosslinked rubber is also referred to as vulcanized rubber, and the rubber composition is also referred to as unvulcanized rubber.

Examples of the base rubber include natural rubber (NR), butadiene rubber (BR), styrene-butadiene rubber (SBR), isoprene rubber (IR), ethylene-propylene rubber (EPDM), chloroprene rubber (CR), acrylonitrile-butadiene rubber (NBR), and isobutylene-isoprene-rubber (IIR). Examples of the chemicals include reinforcing agents such as carbon black and silica, plasticizers such as aromatic oil, fillers such as zinc oxide, lubricants such as stearic acid, antioxidants, processing aids, sulfur, and vulcanization accelerators. Selection of a base rubber and chemicals, the amounts of the selected chemicals, etc., are determined as appropriate according to the specifications of components, such as a tread and a sidewall, for which the rubber composition is used.

In the present disclosure, a complex elastic modulus at a temperature of 70°C, of a component formed from a crosslinked rubber, of the components included in the tire, is measured using a viscoelasticity spectrometer ("VES" manufactured by Iwamoto Seisakusho) under the following conditions according to the standards of JIS K6394.
Initial strain = 10%
Dynamic strain = 2%
Frequency = 10 Hz
Deformation mode = tension

In this measurement, a test piece is sampled from the tire. When a test piece cannot be sampled from the tire, a test piece is sampled from a sheet-shaped crosslinked rubber (hereinafter, also referred to as a rubber sheet) obtained by pressurizing and heating a rubber composition, which is used for forming the component to be measured, at a temperature of 170°C for 12 minutes.

In the present disclosure, a breaking load of a steel cord is measured in accordance with the standards of JIS G3510. The tensile speed to obtain the breaking load is set at 50 mm/min.

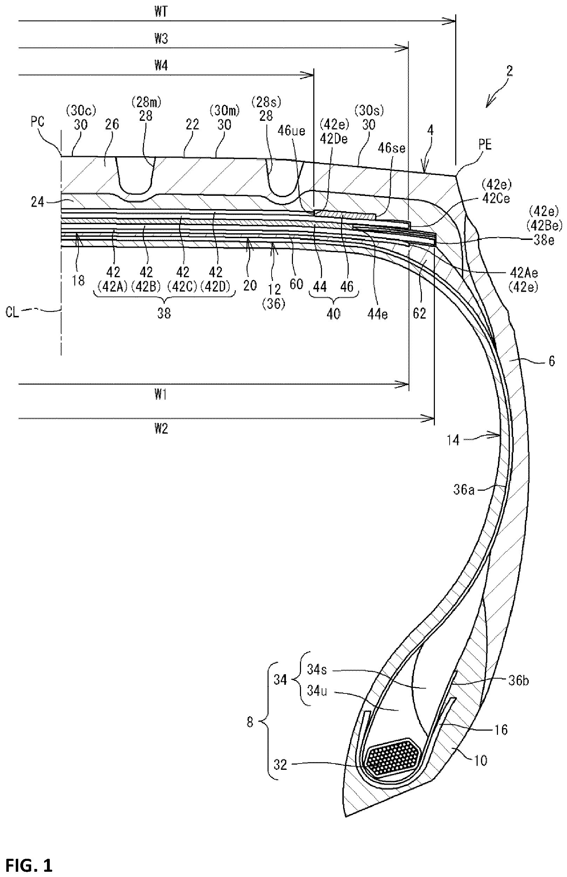

FIG. 1 shows a part of a heavy duty pneumatic tire 2 (hereinafter, also referred to simply as "tire 2") according to an embodiment of the present invention. The tire 2 is mounted to a vehicle such as a truck and a bus. The nominal aspect ratio of the tire 2 is not greater than 65%. In other words, the tire 2 has a nominal aspect ratio of not greater than 65%. The tire 2 is a low-flatness tire.

FIG. 1 shows a part of a cross-section (hereinafter, also referred to as meridian cross-section) of the tire 2 along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2. An alternate long and short dash line CL represents the equator plane of the tire 2.

The tire 2 includes a tread 4, a pair of sidewalls 6, a pair of beads 8, a pair of chafers 10, a carcass 12, an inner liner 14, a pair of steel fillers 16, a reinforcing layer 18, and a buffer layer 20.

The tread 4 comes into contact with a road surface at an outer surface thereof. The outer surface is a tread surface 22. In FIG. 1, reference character PC represents the point of intersection of the tread surface 22 and the equator plane CL. The point of intersection PC is the equator of the tire 2. The equator PC is the radially outer end of the tire 2.

In FIG. 1, reference character PE represents an end of the tread surface 22. A length indicated by an arrow WT is the width of the tread surface 22. The width WT of the tread surface 22 is the distance in the axial direction from a first end PE of the tread surface 22 to a second end PE of the tread surface 22. The width WT of the tread surface 22 is also referred to as a width WT of the tread 4.

In the tire 2, when the ends PE of the tread surface 22 cannot be identified from the appearance, the positions, on the tread surface 22, corresponding to the outer ends in the axial direction of a ground-contact surface obtained when the normal load is applied to the tire 2 in the normal state and the tire 2 is brought into contact with a flat surface at a camber angle of 0° are defined as the ends PE of the tread surface 22.

The tread 4 includes a base portion 24 and a cap portion 26 located radially outward of the base portion 24. The base portion 24 is formed from a crosslinked rubber having low heat generation properties. The cap portion 26 is formed from a crosslinked rubber for which wear resistance and grip performance are taken into consideration. As shown in FIG. 1, the base portion 24 of the tire 2 covers the entirety of the reinforcing layer 18. The cap portion 26 covers the entirety of the base portion 24.

In the tire 2, at least three circumferential grooves 28 are formed on the tread 4. On the tread 4 shown in FIG. 1, four circumferential grooves 28 are formed. These circumferential grooves 28 are aligned in the axial direction and continuously extend in the circumferential direction.

Among the four circumferential grooves 28, the circumferential groove 28 located on each outer side in the axial direction is a shoulder circumferential groove 28s. The circumferential grooves 28 located axially inward of the shoulder circumferential grooves 28s are middle circumferential grooves 28m. The four circumferential grooves 28 of the tire 2 include a pair of the middle circumferential grooves 28m and a pair of the shoulder circumferential grooves 28s.

In the tire 2, from the viewpoint of contribution to drainage performance and traction performance, the width in the axial direction of each middle circumferential groove 28m is preferably not less than 2% and not greater than 10% of the width WT of the tread 4. The depth of each middle circumferential groove 28m is preferably not less than 13 mm and not greater than 25 mm. The width in the axial direction of each shoulder circumferential groove 28s is preferably not less than 1% and not greater than 7% of the width WT of the tread 4. The depth of each shoulder circumferential groove 28s is preferably not less than 13 mm and not greater than 25 mm.

As described above, at least three circumferential grooves 28 are formed on the tread 4. Accordingly, at least four land portions 30 are formed in the tread 4. On the tread 4 of the tire 2 shown in FIG. 1, four circumferential grooves 28 are formed, so that five land portions 30 are formed in the tread 4. These land portions 30 are aligned in the axial direction and continuously extend in the circumferential direction.

Among the five land portions 30, the land portion 30 located on each outer side in the axial direction is a shoulder land portion 30s. Each shoulder land portion 30s is located axially outward of the shoulder circumferential groove 28s and includes the end PE of the tread surface 22. The land portions 30 located axially inward of the shoulder land portions 30s are middle land portions 30m. The land portion 30 located axially inward of the middle land portions 30m is a center land portion 30c. The five land portions 30 of the tire 2 include the center land portion 30c, a pair of the middle land portions 30m, and a pair of the shoulder land portions 30s.

In the tire 2, the width in the axial direction of the center land portion 30c is not less than 10% and not greater than 18% of the width WT of the tread 4. The width in the axial direction of each middle land portion 30m is not less than 10% and not greater than 18% of the width WT of the tread 4. The width in the axial direction of each shoulder land portion 30s is not less than 15% and not greater than 25% of the width WT of the tread 4. The width in the axial direction of each land portion 30 is represented as the width in the axial direction of the top surface of the land portion 30 which forms a part of the tread surface 22.

In the tire 2, the land portion 30 located at the center in the axial direction among the land portions 30 formed in the tread 4, that is, the center land portion 30c, is located on the equator plane CL. The tire 2 includes the tread 4 formed such that the land portion 30 is located on the equator plane CL. The tread 4 may be formed such that the circumferential groove 28 is located on the equator plane CL.

Each sidewall 6 is connected to an end of the tread 4. The sidewall 6 extends radially inward from the end of the tread 4. The sidewall 6 is located radially inward of the tread 4. The sidewall 6 is formed from a crosslinked rubber.

Each bead 8 is located radially inward of the sidewall 6. The bead 8 includes a core 32 and an apex 34.

The core 32 extends in the circumferential direction. The core 32 includes a wound wire made of steel. The core 32 has a substantially hexagonal cross-sectional shape.

The apex 34 is located radially outward of the core 32. The apex 34 includes an inner apex 34u and an outer apex 34s. The inner apex 34u extends radially outward from the core 32. The outer apex 34s is located radially outward of the inner apex 34u. The inner apex 34u is formed from a hard crosslinked rubber. The outer apex 34s is formed from a crosslinked rubber that is more flexible than the inner apex 34u.

Each chafer 10 is located axially outward of the bead 8. The chafer 10 is located radially inward of the sidewall 6. The chafer 10 comes into contact with a rim (not shown). The chafer 10 is formed from a crosslinked rubber for which wear resistance is taken into consideration.

The carcass 12 is located inward of the tread 4, the pair of sidewalls 6, and the pair of chafers 10. The carcass 12 extends on and between one bead 8 and the other bead 8.

The carcass 12 includes at least one carcass ply 36. The carcass 12 of the tire 2 is composed of one carcass ply 36. The carcass ply 36 is turned up around each core 32 from the inner side toward the outer side in the axial direction. The carcass ply 36 has a ply body 36a which extends from a first core 32 to a second core 32, and a pair of turned-up portions 36b which are connected to the ply body 36a and turned up around the respective cores 32 from the inner side toward the outer side in the axial direction.

The carcass ply 36 includes a large number of carcass cords aligned with each other, which are not shown in FIG. 1. These carcass cords are covered with a topping rubber. Each carcass cord intersects the equator plane CL. In the tire 2, an angle of the carcass cords relative to the equator plane CL (hereinafter, referred to as intersection angle of the carcass cords) is not less than 70° and not greater than 90°. The carcass 12 has a radial structure. The carcass cords of the tire 2 are steel cords.

The inner liner 14 is located inward of the carcass 12. The inner liner 14 is joined to the inner surface of the carcass 12 via an insulation (not shown) formed from a crosslinked rubber. The inner liner 14 forms an inner surface of the tire 2. The inner liner 14 is formed from a crosslinked rubber that has an excellent air blocking property. The inner liner 14 maintains the internal pressure of the tire 2.

Each steel filler 16 is located at a bead portion. The steel filler 16 is turned up around the core 32 from the inner side toward the outer side in the axial direction along the carcass ply 36. The steel filler 16 includes a large number of filler cords aligned with each other, which are not shown. Steel cords are used as filler cords.

The reinforcing layer 18 is located between the tread 4 and the carcass 12 in the radial direction. The reinforcing layer 18 of the tire 2 includes a belt 38 and a band 40. The reinforcing layer 18 may be composed of only the belt 38.

The belt 38 is located radially inward of the tread 4. The belt 38 includes four belt plies 42. These belt plies 42 are aligned in the radial direction. Each belt ply 42 is disposed such that both ends 42e thereof are opposed to each other across the equator plane CL.

The four belt plies 42 are a first belt ply 42A, a second belt ply 42B, a third belt ply 42C, and a fourth belt ply 42D.

Among the four belt plies 42, the belt ply 42 located on the inner side in the radial direction is the first belt ply 42A. The second belt ply 42B is located radially outward of the first belt ply 42A. The third belt ply 42C is located radially outward of the second belt ply 42B. The fourth belt ply 42D is located radially outward of the third belt ply 42C. The fourth belt ply 42D is located on the outer side in the radial direction among the four belt plies 42.

As shown in FIG. 1, the end 42e of each belt ply 42 is located axially outward of the shoulder circumferential groove 28s. An end 42De of the fourth belt ply 42D may be located inward of the shoulder circumferential groove 28s. From the viewpoint of preventing damage, the fourth belt ply 42D is disposed such that the end 42De of the fourth belt ply 42D does not overlap the shoulder circumferential groove 28s in the radial direction.

In FIG. 1, a length indicated by an arrow W1 is the width in the axial direction of the first belt ply 42A. A length indicated by an arrow W2 is the width in the axial direction of the second belt ply 42B. A length indicated by an arrow W3 is the width in the axial direction of the third belt ply 42C. A length indicated by an arrow W4 is the width in the axial direction of the fourth belt ply 42D. The width in the axial direction of each belt ply 42 is the distance in the axial direction from a first end 42e of the belt ply 42 to a second end 42e of the belt ply 42. The end 42e of the belt ply 42 is represented by an end of a belt cord included in the belt ply 42 described later.

In the tire 2, the second belt ply 42B has the largest width W2 in the axial direction, and the fourth belt ply 42D has the smallest width W4 in the axial direction. An end 42Ae of the first belt ply 42A and an end 42Ce of the third belt ply 42C are located between an end 42Be of the second belt ply 42B and the end 42De of the fourth belt ply 42D in the axial direction.

The width W1 in the axial direction of the first belt ply 42A and the width W3 in the axial direction of the third belt ply 42C are equal to each other. The width W1 in the axial direction of the first belt ply 42A may be larger than the width W3 in the axial direction of the third belt ply 42C, or may be smaller than the width W3 in the axial direction of the third belt ply 42C.

In the tire 2, from the viewpoint of effectively increasing the stiffness of the tread portion, the ratio (W1/WT) of the width W1 in the axial direction of the first belt ply 42A to the width WT of the tread 4 is preferably not less than 0.70 and not greater than 0.90. The ratio (W2/WT) of the width W2 in the axial direction of the second belt ply 42B to the width WT of the tread 4 is preferably not less than 0.75 and not greater than 0.95. The ratio (W3/WT) of the width W3 in the axial direction of the third belt ply 42C to the width WT of the tread 4 is preferably not less than 0.70 and not greater than 0.90. The ratio (W4/WT) of the width W4 in the axial direction of the fourth belt ply 42D to the width WT of the tread 4 is not less than 0.50. The width W4 in the axial direction of the fourth belt ply 42D is set as appropriate in consideration of the specifications of the tire 2 (in particular, the position of each shoulder circumferential groove 28s).

In the tire 2, the width in the axial direction of the belt 38 is represented as the width in the axial direction of the belt ply 42 having the largest width in the axial direction. As described above, the second belt ply 42B has the largest width W2 in the axial direction. The width in the axial direction of the belt 38 of the tire 2 is represented as the width W2 in the axial direction of the second belt ply 42B. In the tire 2, the end 42Be of the second belt ply 42B is an end 38e of the belt 38.

The band 40 includes a full band 44 and a pair of edge bands 46. The full band 44 is disposed such that both ends 44e thereof are opposed to each other across the equator plane CL. Each end 44e of the full band 44 is located axially inward of the end 38e of the belt 38. Each end 44e of the full band 44 is located between the end 42Ce of the third belt ply 42C (or the end 42Ae of the first belt ply 42A) and the end 42De of the fourth belt ply 42D in the axial direction.

The pair of edge bands 46 are disposed so as to be spaced apart from each other in the axial direction across the equator plane CL. In the tire 2, the fourth belt ply 42D which forms a part of the belt 38 is located between the pair of edge bands 46.

Each edge band 46 is located between the tread 4 and the full band 44 in the radial direction. The edge band 46 is located radially outward of the end 44e of the full band 44. An inner end 46ue of the edge band 46 is located axially inward of the end 44e of the full band 44. An outer end 46se of the edge band 46 is located axially outward of the end 44e of the full band 44. The edge band 46 overlaps the end 44e of the full band 44 in the radial direction. The position of the outer end 46se of the edge band 46 may coincide with the position of the end 44e of the full band 44 in the axial direction. In this case as well, the edge band 46 is located radially outward of the end 44e of the full band 44.

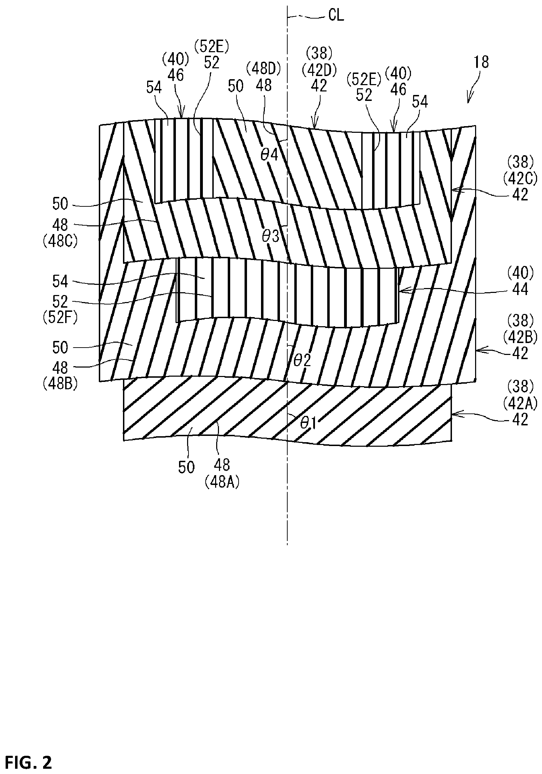

FIG. 2 shows the configuration of the reinforcing layer 18. In FIG. 2, the right-left direction is the axial direction of the tire 2, and the up-down direction is the circumferential direction of the tire 2. The direction perpendicular to the surface of the drawing sheet of FIG. 2 is the radial direction of the tire 2. The front side of the drawing sheet of FIG. 2 is the outer side in the radial direction, and the back side of this drawing sheet is the inner side in the radial direction.

As shown in FIG. 2, each belt ply 42 included in the belt 38 includes a large number of belt cords 48 aligned with each other. In FIG. 2, for the convenience of description, the belt cords 48 are represented by solid lines, but the belt cords 48 are covered with a topping rubber 50.

The belt cords 48 of the tire 2 are steel cords. The density of the belt cords 48 in each belt ply 42 is not less than 15 ends/5 cm and not greater than 30 ends/5 cm.

In each belt ply 42, the belt cords 48 are tilted relative to the circumferential direction.

The direction in which the belt cords 48 included in the first belt ply 42A are tilted (hereinafter, referred to as tilt direction of first belt cords 48A) is the same as the direction in which the belt cords 48 included in the second belt ply 42B are titled (hereinafter, referred to as tilt direction of second belt cords 48B). The tilt direction of the first belt cords 48A may be opposite to the tilt direction of the second belt cords 48B.

The direction in which the belt cords 48 included in the third belt ply 42C are tilted (hereinafter, referred to as tilt direction of third belt cords 48C) is opposite to the tilt direction of the second belt cords 48B. In the tire 2, the belt 38 is formed such that the tilt direction of the second belt cords 48B and the tilt direction of the third belt cords 48C are opposite to each other.

The direction in which the belt cords 48 included in the fourth belt ply 42D are tilted (hereinafter, referred to as tilt direction of fourth belt cords 48D) is the same as the tilt direction of the third belt cords 48C. The tilt direction of the fourth belt cords 48D may be opposite to the tilt direction of the third belt cords 48C.

In FIG. 2, an angle θ1 is an angle of the belt cords 48 included in the first belt ply 42A relative to the equator plane CL (hereinafter, referred to as tilt angle θ1 of the first belt cords 48A). An angle θ2 is an angle of the belt cords 48 included in the second belt ply 42B relative to the equator plane CL (hereinafter, referred to as tilt angle θ2 of the second belt cords 48B). An angle θ3 is an angle of the belt cords 48 included in the third belt ply 42C relative to the equator plane CL (hereinafter, referred to as tilt angle θ3 of the third belt cords 48C). An angle θ4 is an angle of the belt cords 48 included in the fourth belt ply 42D relative to the equator plane CL (hereinafter, referred to as tilt angle θ4 of the fourth belt cords 48D).

In the tire 2, each of the tilt angle θ1 of the first belt cords 48A, the tilt angle θ2 of the second belt cords 48B, the tilt angle θ3 of the third belt cords 48C, and the tilt angle θ4 of the fourth belt cords 48D is preferably not less than 10° and preferably not greater than 60°.

From the viewpoint of effectively restraining movement of the tread portion and obtaining a ground-contact surface having a stable shape, the tilt angle θ1 of the first belt cords 48A is more preferably not less than 40° and more preferably not greater than 60°. The tilt angle θ2 of the second belt cords 48B is more preferably not less than 15° and more preferably not greater than 30°. The tilt angle θ2 of the second belt cords 48B is further preferably not greater than 20°. The tilt angle θ3 of the third belt cords 48C is more preferably not less than 15° and more preferably not greater than 30°. The tilt angle θ3 of the third belt cords 48C is further preferably not greater than 20°. The tilt angle θ4 of the fourth belt cords 48D is more preferably not less than 15° and more preferably not greater than 50°. The tilt angle θ4 of the fourth belt cords 48D is further preferably not greater than 25°.

As shown in FIG. 2, the full band 44 and the edge bands 46 included in the band 40 each include a helically wound band cord 52. In FIG. 2, for the convenience of description, the band cords 52 are represented by solid lines, but each band cord 52 is covered with a topping rubber 54.

In the tire 2, the band cords 52 are steel cords or cords formed from an organic fiber (hereinafter, referred to as organic fiber cords). In the case where organic fiber cords are used as the band cords 52, examples of the organic fiber include nylon fibers, polyester fibers, rayon fibers, and aramid fibers. As a band cord 52F of the full band 44 and band cords 52E of the edge bands 46, the same cord may be used, or different cords may be used. The band cords 52 used for the full band 44 and the edge bands 46 are determined according to the specifications of the tire 2.

As described above, the full band 44 includes the helically wound band cord 52F. The full band 44 has a jointless structure. In the full band 44, an angle of the band cord 52F relative to the circumferential direction is preferably not greater than 5° and more preferably not greater than 2°. The band cord 52F extends substantially in the circumferential direction.

The density of the band cord 52F in the full band 44 is not less than 20 ends/5 cm and not greater than 35 ends/5 cm. The density of the band cord 52F is represented as the number of cross-sections of the band cord 52F included per 5 cm width of the full band 44 in a cross-section of the full band 44 included in the meridian cross-section.

As described above, each edge band 46 includes the helically wound band cord 52E. The edge band 46 has a jointless structure. In the edge band 46, an angle of the band cord 52E relative to the circumferential direction is preferably not greater than 5° and more preferably not greater than 2°. The band cord 52E of the edge band 46 extends substantially in the circumferential direction.

The density of the band cord 52E in the edge band 46 is not less than 20 ends/5 cm and not greater than 35 ends/5 cm. The density of the band cord 52E is represented as the number of cross-sections of the band cord 52E included per 5 cm width of the edge band 46 in a cross-section of the edge band 46 included in the meridian cross-section.

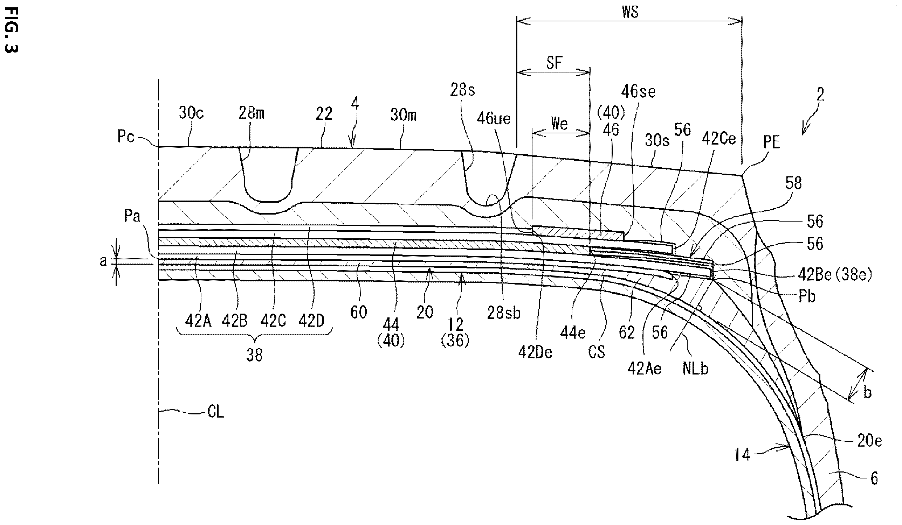

FIG. 3 shows a part of the cross-section of the tire 2 shown in FIG. 1. FIG. 3 shows the tread portion of the tire 2.

In the tire 2, each of the end 42Be of the second belt ply 42B and the end 42Ce of the third belt ply 42C is covered with a rubber layer 56. A plurality of rubber layers 56 are further disposed between the end 42Be of the second belt ply 42B and the end 42Ce of the third belt ply 42C, each of which is covered with the rubber layer 56. In the tire 2, an edge member 58 including four rubber layers 56 in total is formed between the end 42Be of the second belt ply 42B and the end 42Ce of the third belt ply 42C. The edge member 58 is formed from a crosslinked rubber. The edge member 58 contributes to maintaining the interval between the end 42Be of the second belt ply 42B and the end 42Ce of the third belt ply 42C. In the tire 2, a change of the positional relationship between the end 42Be of the second belt ply 42B and the end 42Ce of the third belt ply 42C due to running is suppressed. The edge member 58 is a part of the reinforcing layer 18. The reinforcing layer 18 of the tire 2 includes a pair of edge members 58 in addition to the belt 38 and the band 40.

The buffer layer 20 is located between the carcass 12 and the belt 38 in the radial direction. The buffer layer 20 is disposed such that both ends 20e thereof are opposed to each other across the equator plane CL. Each end 20e of the buffer layer 20 is located axially outward of the end 38e of the belt 38. Each end 20e of the buffer layer 20 is located radially inward of the end 38e of the belt 38.

The buffer layer 20 is formed from a crosslinked rubber. A complex elastic modulus E* of the buffer layer 20 is not less than 3.0 MPa and not greater than 6.0 MPa.

In the present disclosure, the thickness of the buffer layer 20 is measured along a normal line of the inner surface of the tire 2 in the meridian cross-section of the tire 2.

The buffer layer 20 includes a sheet portion 60 and a pair of hump portions 62.

The sheet portion 60 extends from the equator plane CL toward each hump portion 62.

In FIG. 3, reference character Pa represents the point of intersection of the outer surface of the sheet portion 60 and the equator plane CL. A length indicated by arrows a is the thickness of the sheet portion 60 at the equator plane CL. The thickness a is measured along an inner surface normal line that is normal to the inner surface of the tire 2 and passes through the point of intersection Pa (that is, the equator plane CL). The sheet portion 60 has a uniform thickness a. Of the buffer layer 20, a portion having the thickness a is the sheet portion 60.

Each hump portion 62 is located axially outward of the sheet portion 60. The hump portion 62 is integrated with the sheet portion 60.

In FIG. 3, reference character Pb represents a specific position on the outer surface of the hump portion 62. A solid line NLb is an inner surface normal line that is normal to the inner surface of the tire 2 and passes through the position Pb. A length indicated by a double-headed arrow b is the thickness of the hump portion 62 at the position Pb. The thickness b is measured along the inner surface normal line NLb of the tire 2.

The thickness of the hump portion 62 shows the maximum at the above-described position Pb. In other words, the hump portion 62 has the maximum thickness b at the position Pb. The position Pb is a maximum thickness position.

The thickness of the hump portion 62 gradually increases from the boundary between the sheet portion 60 and the hump portion 62 toward the maximum thickness position Pb, and gradually decreases from the maximum thickness position Pb toward the end 20e of the buffer layer 20. In the meridian cross-section of the tire 2, the hump portion 62 has a triangular cross-sectional shape.

As shown in FIG. 3, the maximum thickness position Pb of the hump portion 62 is located near the end 38e of the belt 38. The hump portion 62 has the maximum thickness b at the end 38e of the belt 38.

In the tire 2, the thickness of the sheet portion 60 is represented as the thickness a at the equator plane CL. The thickness of the hump portion 62 is represented as the maximum thickness b. The hump portion 62 is thicker than the sheet portion 60.

In FIG. 3, a position indicated by reference character CS is the boundary between the sheet portion 60 and the hump portion 62 in the tire 2. The boundary CS is located between a bottom 28sb of the shoulder circumferential groove 28s and the end 42Ae of the first belt ply 42A in the axial direction.

In the tire 2, the hump portion 62 of the buffer layer 20 is located between the end 38e of the belt 38 and the carcass 12. When the tire 2 runs, strain occurs in a portion at the end 38e of the belt 38, but the thick hump portion 62 alleviates this strain. In the tire 2, occurrence of damage due to this strain is suppressed. The hump portion 62 contributes to improvement of the durability of the tread portion.

The load acting on the tread portion is reduced by bending of each side portion. As described above, the tire 2 is a low-flatness tire. Since the bending allowance of the tire 2 is small, the side portion cannot contribute to reduction of the load acting on the tread portion, unlike each side portion of a high-flatness tire.

In the tire 2, the sheet portion 60 of the buffer layer 20 is located between the carcass 12 and the belt 38 on the inner side of the tread 4. The sheet portion 60 is stacked on the carcass 12 on the radially inner side of the belt 38, and the first belt ply 42A of the belt 38 is stacked on the sheet portion 60.

In the tire 2, the sheet portion 60 of the buffer layer 20 contributes to reduction of the load acting on the tread portion. In the tire 2, the load acting on the tread portion is reduced as compared to a conventional low-flatness tire, and occurrence of damage and uneven wear due to this load is suppressed. The sheet portion 60 contributes to improvement of the durability of the tread portion and uneven wear resistance.

Since the sheet portion 60 contributes to reduction of the load acting on the tread portion, smaller hump portions 62 can be used in the tire 2 than in a conventional low-flatness tire. The compact hump portions 62 contribute to preventing the end 38e of the belt 38 from being raised, and also contribute to forming the contour of the carcass (hereinafter, also referred to as case line) in an appropriate shape. In the tire 2, a ground-contact shape close to the target ground-contact shape is obtained. Even though the internal pressure distributed to the belt 38 is larger than in a high-flatness tire, a significant change of the ground-contact shape due to dimensional growth is suppressed. The buffer layer 20 which includes the sheet portion 60 and the pair of hump portions 62 contributes to improvement of uneven wear resistance.

In the manufacture of a tire, a green tire (which is an unvulcanized tire and is also referred to as a raw cover) is prepared by combining components such as a tread and sidewalls. The tire is obtained by vulcanizing the green tire in a mold.

In a conventional tire, in order to alleviate strain of a belt, a pair of cushion layers are provided between ends of the belt and a carcass. The pair of cushion layers are disposed so as to be spaced apart from each other in the axial direction. At the time of shaping a green tire, each cushion layer is set in position independently, so that there is a concern that the positions of the cushion layers may be shifted relative to the equator plane.

In the tire 2, the sheet portion 60 extends between a first hump portion 62 and a second hump portion 62. By setting the first hump portion 62 at an appropriate position, the second hump portion 62 is also set at an appropriate position. In the tire 2, the positions of the hump portions 62 are less likely to be shifted relative to the equator plane CL. The buffer layer 20 contributes to stabilization of the quality of the tire 2. Since the sheet portion 60 and the pair of hump portions 62 are simultaneously combined into a green tire, the time for shaping the green tire is shortened. The buffer layer 20 also contributes to improvement of the productivity.

In the tire 2, stabilization of the ground-contact shape and reduction of the load acting on the tread portion are achieved. The tire 2 has better durability of the tread portion and better uneven wear resistance than a conventional low-flatness tire. Furthermore, in the tire 2, stabilization of the quality and improvement of the productivity are achieved while the durability of the tread portion and the uneven wear resistance are improved.

In the tire 2, the thickness b of each hump portion 62 is preferably not less than 2.0 mm and not greater than 6.0 mm.

When the thickness b of the hump portion 62 is set to be not less than 2.0 mm, the hump portion 62 can effectively contribute to alleviation of strain generated in the portion at the end 38e of the belt 38. The tire 2 can improve the durability of the tread portion. The hump portion 62 also contributes to formation of the tread surface 22 having an appropriate contour. From this viewpoint, the thickness b of the hump portion 62 is more preferably not less than 2.5 mm and further preferably not less than 3.0 mm.

When the thickness b of the hump portion 62 is set to be not greater than 6.0 mm, the hump portion 62 is formed so as to be compact. The compact hump portion 62 contributes to formation of an appropriate case line. The tire 2 can stabilize the ground-contact shape. From this viewpoint, the thickness b of the hump portion 62 is more preferably not greater than 5.5 mm and further preferably not greater than 5.0 mm.

In the tire 2, the thickness a of the sheet portion 60 is preferably not less than 0.7 mm and not greater than 1.3 mm.

When the thickness a of the sheet portion 60 is set to be not less than 0.7 mm, the sheet portion 60 can effectively contribute to reduction of the load acting on the tread portion. The tire 2 can improve the durability of the tread portion. From this viewpoint, the thickness a of the sheet portion 60 is more preferably not less than 0.8 mm and further preferably not less than 0.9 mm.

When the thickness a of the sheet portion 60 is set to be not greater than 1.3 mm, the influence of the sheet portion 60 on the case line is suppressed. Since an appropriate case line is formed, the tire 2 can stabilize the ground-contact shape. From this viewpoint, the thickness a of the sheet portion 60 is more preferably not greater than 1.2 mm and further preferably not greater than 1.1 mm.

In the tire 2, from the viewpoint of improving the durability of the tread portion and the uneven wear resistance, more preferably, the thickness b of the hump portion 62 is not less than 2.0 mm and not greater than 6.0 mm, and the thickness a of the sheet portion 60 is not less than 0.7 mm and not greater than 1.3 mm.

In the tire 2, the ratio (b/a) of the thickness b of the hump portion 62 to the thickness a of the sheet portion 60 is preferably not less than 2.5 and not greater than 7.5.

When the ratio (b/a) is set to be not less than 2.5, the hump portion 62 contributes to alleviation of strain generated in the portion at the end 38e of the belt 38, and the sheet portion 60 contributes to stabilization of the ground-contact shape. The tire 2 can improve the durability of the tread portion and the uneven wear resistance. From this viewpoint, the ratio (b/a) is more preferably not less than 3.0.

When the ratio (b/a) is set to be not greater than 7.5, the hump portion 62 contributes to stabilization of the ground-contact shape, and the sheet portion 60 contributes to reduction of the load acting on the tread portion. In this case as well, the tire 2 can improve the durability of the tread portion and the uneven wear resistance. From this viewpoint, the ratio (b/a) is more preferably not greater than 6.0.

In the tire 2, from the viewpoint of further improving the durability of the tread portion and the uneven wear resistance, further preferably, the thickness b of the hump portion 62 is not less than 2.0 mm and not greater than 6.0 mm, the thickness a of the sheet portion 60 is not less than 0.7 mm and not greater than 1.3 mm, and the ratio (b/a) of the thickness b of the hump portion 62 to the thickness a of the sheet portion 60 is not less than 2.5 and not greater than 7.5.

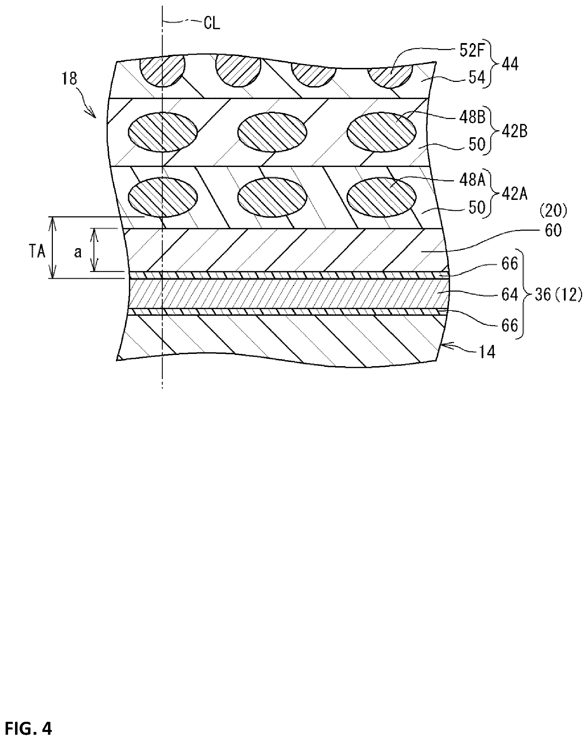

FIG. 4 shows the state of the arrangement of the buffer layer 20 at the equator plane CL. In FIG. 4, an element indicated by reference character 64 is the carcass cord of the carcass ply 36. An element indicated by reference character 66 is a topping rubber.

The buffer layer 20 is located between the carcass ply 36 and the first belt ply 42A. As shown in FIG. 4, the topping rubber 66 of the carcass ply 36, the buffer layer 20, and the topping rubber 50 of the first belt ply 42A are located between the carcass cord 64 and the first belt cords 48A. A rubber component is located between the carcass cord 64 and the first belt cords 48A, and the rubber component includes the topping rubber 66, the buffer layer 20, and the topping rubber 50.

In the tire 2, the distance between the carcass cord 64 and the first belt cords 48A is controlled by adjusting the thickness of the buffer layer 20. In the tire 2, of the buffer layer 20, a portion between a first boundary CS and a second boundary CS is the sheet portion 60 having a uniform thickness a. The distance between the carcass cord 64 and the first belt cords 48A is constant between the first boundary CS and the second boundary CS.

In the present disclosure, the distance between the carcass cord 64 and the first belt cords 48A is the apparent thickness of the buffer layer 20. In particular, the apparent thickness of the buffer layer 20 between the first boundary CS and the second boundary CS is also referred to as apparent thickness of the sheet portion 60.

In FIG. 4, a length indicated by a double-headed arrow TA is the apparent thickness of the sheet portion 60 at the equator plane CL. The apparent thickness TA of the sheet portion 60 is measured along the equator plane CL. In the tire 2, the apparent thickness of the sheet portion 60 is represented as the apparent thickness TA of the sheet portion 60 at the equator plane CL.

In the tire 2, the apparent thickness TA of the sheet portion 60 is preferably not less than 1.7 mm and not greater than 2.3 mm.

When the apparent thickness TA is set to be not less than 1.7 mm, the rubber component between the carcass 12 and the reinforcing layer 18 can effectively contribute to alleviation of strain. Occurrence of damage due to this strain is prevented. From this viewpoint, the apparent thickness TA is more preferably not less than 1.9 mm.

When the apparent thickness TA is set to be not greater than 2.3 mm, the rubber component between the carcass 12 and the reinforcing layer 18 can contribute to suppression of a mass increase. From this viewpoint, the apparent thickness TA is more preferably not greater than 2.1 mm.

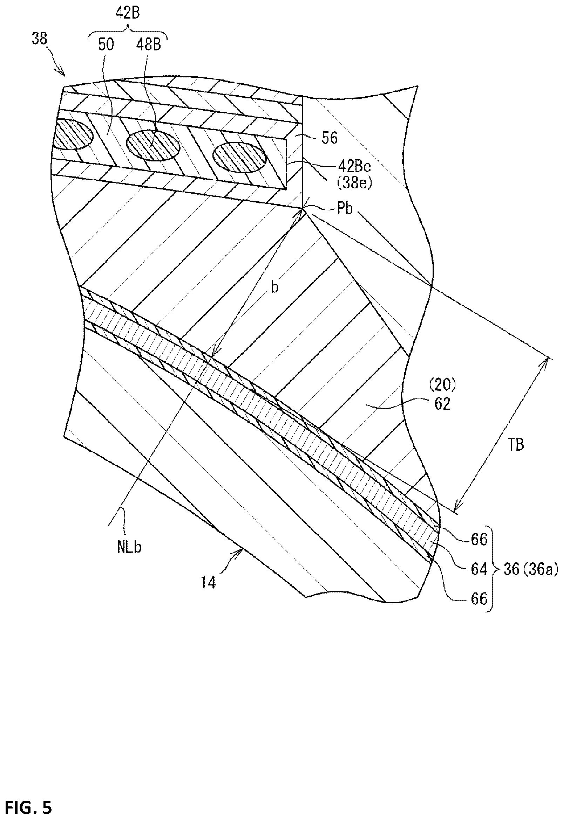

FIG. 5 shows the state of the arrangement of the buffer layer 20 at the end 38e of the belt 38. The buffer layer 20 is stacked on the carcass ply 36. As shown in FIG. 5, the topping rubber 66 of the carcass ply 36 is located between the hump portion 62 of the buffer layer 20 and the carcass cord 64 of the carcass ply 36.

In FIG. 5, a length indicated by a double-headed arrow TB is the distance, from the carcass cord 64 to the maximum thickness position Pb of the hump portion 62, measured along the above-described inner surface normal line NLb. In the present disclosure, the distance TB is the apparent maximum thickness of the hump portion 62. The apparent maximum thickness TB of the hump portion 62 is larger than the apparent thickness TA of the sheet portion 60.

In the tire 2, the apparent maximum thickness TB of the hump portion 62 is preferably not less than 2.5 mm and not greater than 6.5 mm.

When the apparent maximum thickness TB is set to be not less than 2.5 mm, the hump portion 62 can effectively contribute to alleviation of strain generated in the portion at the end 38e of the reinforcing layer 18. In the tire 2, good tread durability is achieved. From this viewpoint, the apparent maximum thickness TB is more preferably not less than 3.0 mm and further preferably not less than 3.5 mm.

When the apparent maximum thickness TB is set to be not greater than 6.5 mm, the case line is formed in an appropriate shape. In the tire 2, a ground-contact shape close to the target ground-contact shape is obtained. In the tire 2, good uneven wear resistance is achieved. From this viewpoint, the apparent maximum thickness TB is more preferably not greater than 6.0 mm and further preferably not greater than 5.5 mm.

In the tire 2, from the viewpoint of improving the tread durability and the uneven wear resistance, more preferably, the apparent thickness TA of the sheet portion 60 is not less than 1.7 mm and not greater than 2.3 mm, and the apparent maximum thickness TB of the hump portion 62 is not less than 2.5 mm and not greater than 6.5 mm.

In the tire 2, the ratio (TB/TA) of the apparent maximum thickness TB of the hump portion 62 to the apparent thickness TA of the sheet portion 60 is preferably not less than 1.1 and not greater than 3.8.

When the ratio (TB/TA) is set to be not less than 1.1, the hump portion 62 contributes to alleviation of strain generated in the portion at the end 38e of the belt 38, and the sheet portion 60 contributes to stabilization of the ground-contact shape. The tire 2 can improve the durability of the tread portion and the uneven wear resistance. From this viewpoint, the ratio (TB/TA) is more preferably not less than 1.3, further preferably not less than 1.9, and particularly preferably not less than 2.0.

When the ratio (TB/TA) is set to be not greater than 3.8, the hump portion 62 contributes to stabilization of the ground-contact shape, and the sheet portion 60 contributes to reduction of the load acting on the tread portion. In this case as well, the tire 2 can improve the durability of the tread portion and the uneven wear resistance. From this viewpoint, the ratio (TB/TA) is more preferably not greater than 3.3.

In the tire 2, from the viewpoint of further improving the durability of the tread portion and the uneven wear resistance, further preferably, the apparent maximum thickness TB of the hump portion 62 is not less than 2.5 mm and not greater than 6.5 mm, the apparent thickness TA of the sheet portion 60 is not less than 1.7 mm and not greater than 2.3 mm, and the ratio (TB/TA) of the apparent maximum thickness TB of the hump portion 62 to the apparent thickness TA of the sheet portion 60 is not less than 1.1 and not greater than 3.8.

In the tire 2, the first belt ply 42A is located between the buffer layer 20 and the second belt ply 42B having the largest width in the axial direction among the belt plies 42 included in the belt 38. As described above, the tilt angle θ1 of the first belt cords 48A is more preferably not less than 40° and not greater than 60°, and the tilt angle θ2 of the second belt cords 48B is more preferably not less than 15° and not greater than 30°. In this case, the tilt angle θ1 of the first belt cords 48A included in the first belt ply 42A which is stacked on the buffer layer 20 is larger than the tilt angle θ2 of the second belt cords 48B included in the second belt ply 42B which is stacked on the first belt ply 42A.

In the tire 2, the load acting on the tread portion is reduced stepwise as compared to the case where a belt ply 42 in which the tilt angle of belt cords 48 is small is stacked on the buffer layer 20. Specific strain is prevented from being generated in the buffer layer 20, so that the buffer layer 20 can stably exhibit a load reduction function. The buffer layer 20 can effectively contribute to reduction of the load acting on the tread portion. From this viewpoint, the tilt angle θ1 of the first belt cords 48A included in the first belt ply 42A which is stacked on the buffer layer 20 is preferably larger than the tilt angle θ2 of the second belt cords 48B included in the second belt ply 42B which is stacked on the first belt ply 42A.

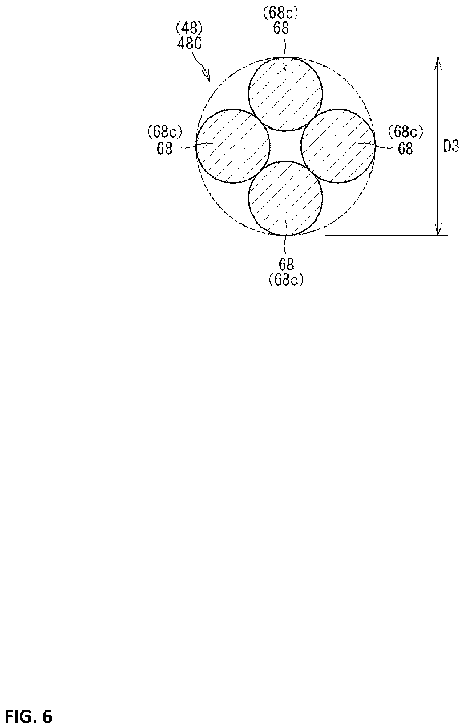

FIG. 6 shows an example of a cross-section of the belt cord 48 included in the belt 38 of the tire 2. The cross-section shown in FIG. 6 is a cross-section of the third belt cord 48C.

The third belt cord 48C is formed by twisting together a plurality of elemental wires 68 (also referred to as steel filaments) made of steel. The third belt cord 48C is a twisted wire.

The third belt cord 48C shown in FIG. 6 is a single-strand cord having a 1 × 4 structure and obtained by twisting together four elemental wires 68c. In the tire 2, for example, a multi-strand cord having a 3 × 3 structure or a layered strand cord having a 3 + 6 structure may be used as each third belt cord 48C. In the tire 2, a cord that is the same as the third belt cords 48C is used as each of the first belt cords 48A and the second belt cords 48B.

When a tire runs on a rough road, cracks may occur due to stones coming into contact with the tread or due to stones being bitten into circumferential grooves. In this case, water penetrates through the cracks into the interior of the tread portion. In the case where each belt cord is a twisted wire, the gap between elemental wires is filled with a topping rubber, but it is difficult to fill the entire gap with the topping rubber. Therefore, the water that has entered through the cracks may enter the gap between the elemental wires. In this case, rust may form on the belt cord. The rust promotes peeling of the topping rubber from the belt cord. Water penetrates through the peeled portion into the interior of the belt cord.

In the tire 2, if rust forms in the fourth belt ply 42D which is located closest to the tread 4, the risk of formation of rust in the third belt ply 42C is increased. If rust forms in the third belt ply 42C, the risk of formation of rust in the second belt ply 42B is increased.

If rust forms in the third belt ply 42C and the second belt ply 42B which are important for the belt 38 to maintain its holding force, damage (hereinafter, referred to as separation) due to peeling may occur.

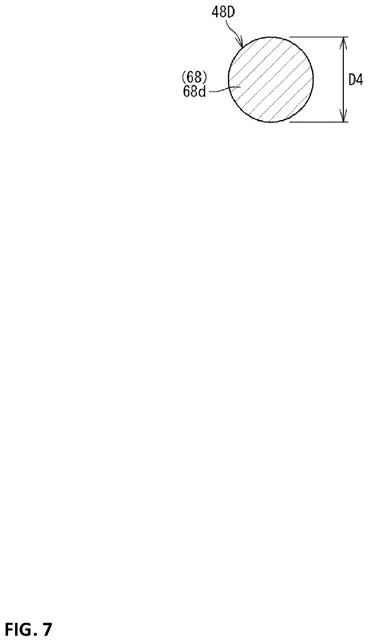

FIG. 7 shows a cross-section of the fourth belt cord 48D included in the fourth belt ply 42D of the tire 2. As shown in FIG. 7, the fourth belt cord 48D is a steel cord composed of a single elemental wire 68d.

In the tire 2, each of the belt cords 48 included in the three belt plies 42 located radially inward of the fourth belt ply 42D is the above-described twisted wire. Meanwhile, each fourth belt cord 48D is not a twisted wire. In the fourth belt cord 48D, there is no gap between elemental wires that exist in the belt cord 48 composed of a twisted wire. Since water does not accumulate in the fourth belt cord 48D, formation of rust on the fourth belt cord 48D is suppressed. Since formation of rust in the fourth belt ply 42D is suppressed, formation of rust is also suppressed in the third belt ply 42C which is located radially inward of the fourth belt ply 42D and in the second belt ply 42B which is located radially inward of the third belt ply 42C. In the tire 2, occurrence of separation is prevented. The fourth belt ply 42D contributes to improvement of the durability of the tread portion. From this viewpoint, in the tire 2, among the plurality of belt plies 42 included in the belt 38, each fourth belt cord 48D included in the belt ply 42 located on the radially outer side, that is, in the fourth belt ply 42D, is preferably a steel cord composed of the single elemental wire 68d. In this case, from the viewpoint of forming the fourth belt ply 42D having appropriate stiffness, the breaking load of the fourth belt cord 48D is more preferably not less than 1000 N and not greater than 1600 N.

In FIG. 7, a length indicated by a double-headed arrow D4 is the outer diameter of the fourth belt cord 48D.

In the tire 2, the outer diameter D4 of the fourth belt cord 48D is preferably not less than 0.6 mm and not greater than 0.8 mm.

When the outer diameter D4 of the fourth belt cord 48D is set to be not less than 0.6 mm, the fourth belt ply 42D is formed so as to have required stiffness. The belt 38 including the fourth belt ply 42D contributes to improvement of the durability of the tread portion. From this viewpoint, the outer diameter D4 is more preferably not less than 0.65 mm.

When the outer diameter D4 of the fourth belt cord 48D is set to be not greater than 0.8 mm, the fourth belt cord 48D is disposed at an appropriate interval from the third belt cord 48C. In the tire 2, as for formation of rust, the fourth belt ply 42D effectively functions as a barrier for the third belt ply 42C. The fourth belt cord 48D contributes to reduction of the mass of the tire 2. From this viewpoint, the outer diameter D4 is more preferably not greater than 0.75 mm.

In the tire 2, from the viewpoint that the fourth belt ply 42D can effectively contribute to prevention of occurrence of separation, further preferably, each fourth belt cord 48D is a steel cord composed of the single elemental wire 68d, the outer diameter D4 of the fourth belt cord 48D is not less than 0.6 mm and not greater than 0.8 mm, and the breaking load of the fourth belt cord 48D is not less than 1000 N and not greater than 1600 N.

In FIG. 6, a length indicated by a double-headed arrow D3 is the outer diameter of the third belt cord 48C. The outer diameter D3 is represented as the diameter of the circumscribed circle of the four elemental wires 68c included in the third belt cord 48C.

In the tire 2, each fourth belt cord 48D is thinner than each third belt cord 48C. Specifically, the ratio (D4/D3) of the outer diameter D4 of the fourth belt cord 48D to the outer diameter D3 of the third belt cord 48C is preferably not less than 0.40 and not greater than 0.60.

When the ratio (D4/D3) is set to be not less than 0.40, the fourth belt ply 42D is formed so as to have required stiffness. The belt 38 including the fourth belt ply 42D contributes to improvement of the durability of the tread portion. From this viewpoint, the ratio (D4/D3) is more preferably not less than 0.43 and further preferably not less than 0.45.

When the ratio (D4/D3) is set to be not greater than 0.60, the fourth belt cord 48D is disposed at an appropriate interval from the third belt cord 48C. In the tire 2, as for formation of rust, the fourth belt ply 42D effectively functions as a barrier for the third belt ply 42C. The fourth belt ply 42D contributes to reduction of the mass of the tire 2. From this viewpoint, the ratio (D4/D3) is more preferably not greater than 0.57 and further preferably not greater than 0.55.

As described above, when the tire 2 runs on a rough road, cracks may occur in the bottoms of the circumferential grooves 28 due to stones being bitten into the circumferential grooves 28. In this case, water may penetrate through the cracks into the interior of the tread portion, causing the belt cord 48 to rust.

In the belt 38 shown in FIG. 3, the end 42De of the fourth belt ply 42D is located axially outward of the shoulder circumferential groove 28s. In the tire 2, the fourth belt ply 42D is located radially inward of all the circumferential grooves 28 formed on the tread 4. Accordingly, even if a stone is bitten into any of the circumferential grooves 28, which are formed on the tread 4, to cause a crack in the bottom of the circumferential groove 28, the fourth belt ply 42D effectively functions as a barrier for the third belt ply 42C as for formation of rust. In the tire 2, occurrence of separation is prevented. The fourth belt ply 42D contributes to improvement of the durability of the tread portion. From this viewpoint, in the tire 2, in the case where each fourth belt cord 48D is a steel cord composed of the single elemental wire 68d, more preferably, the fourth belt ply 42D is disposed such that both ends 42De of the fourth belt ply 42D are opposed to each other across the equator plane CL, and each end 42De of the fourth belt ply 42D is located axially outward of the shoulder circumferential groove 28s.

As described above, in the tire 2, the full band 44 is disposed such that both ends 44e thereof are opposed to each other across the equator plane CL. The full band 44 extends from the equator plane CL toward each end 44e in the axial direction. In the tire 2, furthermore, each edge band 46 is located radially outward of the end 44e of the full band 44.

Although the tire 2 is a low-flatness tire, the full band 44 and the pair of edge bands 46 effectively suppress deformation of the tread portion. Since a change of the case line is suppressed, a change of the ground-contact shape is suppressed.

Since the edge bands 46 hold the ends 44e of the full band 44, fluctuation of the tension of the band cord 52F included in the full band 44 is suppressed. Occurrence of a break of the band cord 52F due to this tension fluctuation is prevented, so that the full band 44 can stably exhibit the function of suppressing a shape change.

In the tire 2, the ground-contact shape is stabilized. From this viewpoint, preferably, the tire 2 includes the full band 44 disposed such that both ends 44e thereof are opposed to each other across the equator plane CL, and each edge band 46 is located radially outward of the end 44e of the full band 44.

As described above, in the tire 2, each end 44e of the full band 44 is located axially inward of the end 38e of the belt 38. The belt 38 is wider than the full band 44. The belt 38 holds each end 44e of the full band 44. The belt 38 contributes to suppression of fluctuation of the tension of the band cord 52F included in the full band 44. Since occurrence of a break of the band cord 52F due to the tension fluctuation is prevented, the full band 44 can stably exhibit the function of suppressing a shape change. From this viewpoint, each end 44e of the full band 44 is preferably located axially inward of the end 38e of the belt 38.

In the tire 2, furthermore, the full band 44 is located between the second belt ply 42B and the third belt ply 42C in the radial direction.

The second belt ply 42B and the third belt ply 42C reduce the force acting on the full band 44. In particular, since the belt cords 48 included in the second belt ply 42B and the belt cords 48 included in the third belt ply 42C intersect each other, the force acting on the full band 44 is effectively reduced. Since fluctuation of the tension of the band cord 52F included in the full band 44 is suppressed, occurrence of a break of the band cord 52F due to this tension fluctuation is prevented. The full band 44 of the tire 2 can stably exhibit the function of suppressing a shape change. From this viewpoint, in the tire 2, the full band 44 is preferably located between the second belt ply 42B and the third belt ply 42C in the radial direction.

As shown in FIG. 3, in the axial direction, the end 44e of the full band 44 is located inward of the end 42Be of the second belt ply 42B, and the end 44e of the full band 44 is located inward of the end 42Ce of the third belt ply 42C. In other words, the second belt ply 42B is wider than the full band 44. The third belt ply 42C is also wider than the full band 44. In the tire 2, the full band 44 is interposed between the second belt ply 42B and the third belt ply 42C which are wider than the full band 44. Since fluctuation of the tension of the band cord 52F included in the full band 44 is more effectively suppressed, a break is less likely to occur in the band cord 52F of the full band 44. The full band 44 of the tire 2 can stably exhibit the function of suppressing a shape change. From this viewpoint, in the tire 2, preferably, the full band 44 is located between the second belt ply 42B and the third belt ply 42C in the radial direction, each end 44e of the full band 44 is located axially inward of the end 42Be of the second belt ply 42B, and each end 44e of the full band 44 is located axially inward of the end 42Ce of the third belt ply 42C.

In a running state of a tire, a tread end portion moves actively. The stiffness of the portion where circumferential grooves are formed is lower than that of the portion where the circumferential grooves are not formed.

As described above, the tire 2 is a low-flatness tire. In the case where the tire 2 has the wide tread surface 22, each shoulder circumferential groove 28s of the tire 2 is located further outward in the axial direction as compared to that of a high-flatness tire. In this case, there is a concern that a shape change around the shoulder circumferential groove 28s may be increased.

In the tire 2, each end 44e of the full band 44 is located axially outward of the shoulder circumferential groove 28s. The full band 44 is located radially inward of each shoulder circumferential groove 28s.

Although the tire 2 is a low-flatness tire, the full band 44 effectively suppresses deformation around each shoulder circumferential groove 28s. Since each edge band 46 is located outward of the end 44e of the full band 44, this deformation is sufficiently suppressed. In particular, in the tire 2, a shape change around each shoulder circumferential groove 28s is effectively suppressed. From this viewpoint, in the tire 2, each end 44e of the full band 44 is preferably located axially outward of the shoulder circumferential groove 28s.

In FIG. 3, a double-headed arrow SF indicates the distance in the axial direction from the shoulder circumferential groove 28s, specifically, the outer edge of the shoulder circumferential groove 28s, to the end 44e of the full band 44. A double-headed arrow WS indicates the width in the axial direction of the shoulder land portion 30s. The width WS in the axial direction is represented as the distance in the axial direction from the inner end of the top surface of the shoulder land portion 30s (that is, the outer edge of the shoulder circumferential groove 28s) to the outer end of the top surface (in the tire 2, the end PE of the tread surface 22).

In the tire 2, the ratio (SF/WS) of the distance SF in the axial direction from the shoulder circumferential groove 28s to the end 44e of the full band 44, to the width WS in the axial direction of the shoulder land portion 30s, is preferably not greater than 50%. Accordingly, the end 44e of the full band 44 is located away from the end portion of the tread 4 which moves actively in a running state, so that fluctuation of the tension of the band cord 52 is suppressed. In the tire 2, occurrence of a break of the band cord 52 is suppressed. The full band 44 of the tire 2 contributes to suppression of a shape change. From this viewpoint, the ratio (SF/WS) is more preferably not greater than 35% and further preferably not greater than 25%.

When the ratio (SF/WS) is set to be not less than 10%, the end 44e of the full band 44 is located at an appropriate interval from the shoulder circumferential groove 28s, specifically, the bottom of the shoulder circumferential groove 28s. In the tire 2, occurrence of damage starting from the bottom of the shoulder circumferential groove 28s is suppressed. Since the width of the full band 44 is ensured, the full band 44 contributes to suppression of a shape change of the tire 2. From this viewpoint, the ratio (SF/WS) is more preferably not less than 15%.

As described above, in the tire 2, the inner end 46ue of each edge band 46 is located inward of the end 44e of the full band 44 in the axial direction. In FIG. 3, a length indicated by a double-headed arrow We is the distance in the axial direction from the end 44e of the full band 44 to the inner end 46ue of the edge band 46.

In the tire 2, the distance We in the axial direction from the end 44e of the full band 44 to the inner end 46ue of the edge band 46 is preferably not less than 10 mm. Accordingly, the edge band 46 effectively holds the end 44e of the full band 44. Fluctuation of the tension of the band cord 52F included in the full band 44 is suppressed, so that occurrence of a break of the band cord 52F due to this tension fluctuation is suppressed. The full band 44 of the tire 2 can more stably exhibit the function of suppressing a shape change. From this viewpoint, the distance We in the axial direction is preferably not less than 20 mm. From the viewpoint of suppressing the influence of the edge band 46 on the mass of the tire 2, the distance We in the axial direction is preferably not greater than 50 mm.

In the tire 2, involvement in occurrence of damage starting from the bottom 28sb of the shoulder circumferential groove 28s is taken into consideration for setting the position of the inner end 46ue of the edge band 46. From the viewpoint of effectively suppressing occurrence of damage starting from the bottom 28sb of the shoulder circumferential groove 28s, in the axial direction, the inner end 46ue of the edge band 46 is preferably located outward of the bottom 28sb of the shoulder circumferential groove 28s, and is more preferably located further outward of the shoulder circumferential groove 28s. In the tire 2, the inner end 46ue of the edge band 46 may be located inward of the bottom 28sb of the shoulder circumferential groove 28s in the axial direction. In this case, the inner end 46ue of the edge band 46 is more preferably located further inward of the shoulder circumferential groove 28s in the axial direction.

As shown in FIG. 3, in the tire 2, the boundary CS between the sheet portion 60 and the hump portion 62 is located axially outward of the end 44e of the full band 44. Accordingly, the hump portion 62 is made compact, and a case line having an appropriate shape is formed. A ground-contact shape close to the target ground-contact shape is obtained. In the tire 2, good uneven wear resistance is achieved. From this viewpoint, the boundary CS between the sheet portion 60 and the hump portion 62 is preferably located axially outward of the end 44e of the full band 44.

In the present disclosure, the boundary CS between the sheet portion 60 and the hump portion 62 is represented as a position at which the apparent thickness of the buffer layer 20 is 1.2 times the apparent thickness TA of the sheet portion 60.

As shown in FIG. 3, in the tire 2, the boundary CS between the sheet portion 60 and the hump portion 62 is located axially inward of the outer end 46se of the edge band 46. Accordingly, concentration of strain on a portion at the boundary CS between the sheet portion 60 and the hump portion 62 is suppressed. The hump portion 62 can effectively contribute to alleviation of strain generated in the portion at the end 38e of the belt 38. In the tire 2, good tread durability is achieved. From this viewpoint, the boundary CS between the sheet portion 60 and the hump portion 62 is preferably located axially inward of the outer end 46se of the edge band 46.

In the tire 2, from the viewpoint of achieving good uneven wear resistance and tread durability, the boundary CS between the sheet portion 60 and the hump portion 62 is more preferably located between the end 44e of the full band 44 and the outer end 46se of the edge band 46 in the axial direction.

As is obvious from the above description, according to the present invention, the heavy duty pneumatic tire 2 that can achieve stabilization of the ground-contact shape and reduction of the load acting on the tread portion, is obtained. The present invention exhibits a remarkable effect in the low-flatness heavy duty pneumatic tire 2 having a nominal aspect ratio of not greater than 65%.

### EXAMPLES

Hereinafter, the present invention will be described in further detail by means of examples, etc..

### [Example 1]

A heavy duty pneumatic tire (tire size = 315/45R22.5) having the basic structure shown in FIG. 1 to FIG. 3 and having specifications shown in Table 1 below was obtained.

In Example 1, the apparent thickness TA of the sheet portion of the buffer layer was 2.0 mm, and the apparent maximum thickness TB of each hump portion was 4.5 mm. The complex elastic modulus of the buffer layer was 3.4 MPa.

A steel cord having the configuration shown in FIG. 7 was used as each fourth belt cord. The outer diameter D4 of the fourth belt cord was 0.7 mm, and the breaking load of the fourth belt cord was 1300 N.

A steel cord having the configuration shown in FIG. 6 was used as each of the first belt cords, the second belt cords, and the third belt cords.

The ratio (D4/D3) of the outer diameter D4 of the fourth belt cord to the outer diameter D3 of the third belt cord was 0.50.

### [Comparative Example 1]

A tire of Comparative Example 1 was obtained in the same manner as Example 1, except that a pair of independent hump portions formed a buffer layer without providing a sheet portion, the apparent maximum thickness TB of each hump portion was set as shown in Table 1 below, and each fourth belt cord was composed of a steel cord that was the same as the third belt cords. The tire of Comparative Example 1 is a conventional tire.

### [Examples 2, 6, and 8 and Comparative Example 2]

Tires of Examples 2, 6, and 8 and Comparative Example 2 were obtained in the same manner as Example 1, except that the apparent maximum thickness TB was changed such that the ratio (TB/TA) was set as shown in Tables 1 and 2 below.

### [Examples 3 to 5 and 7]

Tires of Examples 3 to 5 and 7 were obtained in the same manner as Example 1, except that the apparent thickness TA was changed such that the ratio (TB/TA) was set as shown in Tables 1 and 2 below.

### [Durability of Tread Portion]

A test tire was fitted onto a rim (size = 22.5×9.75) and inflated with air to adjust the internal pressure thereof to 900 kPa. On a drum running tester (drum diameter = 1707 mm), the tire was caused to run while increasing the speed from 80 km/h in steps of 10 km/h every two hours. The time until damage (tread loose cracking (TLC)) occurred was measured. The vertical load was set to 35.89 kN. The results are represented as indexes in the cells for durability in Tables 1 and 2 below. A higher value represents that the durability of the tread portion is better.

### [Uneven Wear Resistance]

A test tire was fitted onto a rim (size = 22.5×9.75) and inflated with air to adjust the internal pressure thereof to a normal internal pressure. The tire was mounted to a drive shaft of a test vehicle (tractor head). A trailer loaded with luggage was towed by the test vehicle, and the test vehicle was caused to run on general roads. When the wear rate of the tire reached 30% in terms of mass, the difference between the wear amount of the shoulder land portion and the wear amount of the middle land portion of the test tire was calculated. The results are shown as indexes in the cells for uneven wear resistance in Tables 1 and 2 below. A higher value represents that the difference in wear amount is smaller and the uneven wear resistance is better. That is, a higher value represents that a change of the ground-contact shape is smaller and the ground-contact shape is made more stable.

### [Overall Evaluation]

The total of the indexes obtained in the respective evaluations was calculated. The results are represented in the cells for overall evaluation in Tables 1 and 2 below. A higher value represents that the respective characteristics are better balanced and the result is better.

**[Table 1]**

| | Comparative Example 1 | Comparative Example 2 | Example 1 | Example 2 | Example 3 |
|---|---|---|---|---|---|
| Apparent thickness TA [mm] | - | 2.0 | 2.0 | 2.0 | 2.4 |
| Apparent maximum thickness TB [mm] | 8.5 | 1.5 | 4.5 | 2.5 | 4.5 |
| TB/TA [-] | - | 0.8 | 2.3 | 1.3 | 1.9 |
| D4 [mm] | 1.4 | 0.7 | 0.7 | 0.7 | 0.7 |
| Breaking load [N] | 1650 | 1300 | 1300 | 1300 | 1300 |
| D4/D3 [-] | 1.00 | 0.50 | 0.50 | 0.50 | 0.50 |
| Durability | 90 | 90 | 100 | 98 | 100 |
| Ground-contact shape | 90 | 95 | 100 | 98 | 95 |
| Overall evaluation | 180 | 185 | 200 | 196 | 195 |

**[Table 2]**

| | Example 4 | Example 5 | Example 6 | Example 7 | Example 8 |
|---|---|---|---|---|---|
| Apparent thickness TA [mm] | 2.3 | 1.7 | 2.0 | 1.6 | 2.0 |
| Apparent maximum thickness TB [mm] | 4.5 | 4.5 | 6.5 | 4.5 | 7.5 |
| TB/TA [-] | 2.0 | 2.6 | 3.3 | 2.8 | 3.8 |
| D4 [mm] | 0.7 | 0.7 | 0.7 | 0.7 | 0.7 |
| Breaking load [N] | 1300 | 1300 | 1300 | 1300 | 1300 |
| D4/D3 [-] | 0.50 | 0.50 | 0.50 | 0.50 | 0.50 |
| Durability | 100 | 98 | 100 | 95 | 100 |
| Ground-contact shape | 98 | 100 | 98 | 100 | 90 |
| Overall evaluation | 198 | 198 | 198 | 195 | 190 |

As shown in Tables 1 and 2, in each Example, the ground-contact shape is stabilized, the durability of the tread portion is improved, and stabilization of the ground-contact shape and reduction of the load acting on the tread portion are achieved. From the evaluation results, advantages of the present invention are clear.

The above-described technology for achieving stabilization of a ground-contact shape and reduction of the load acting on a tread portion can be applied to various tires.

## Claims

1. A heavy duty pneumatic tire (2) having a nominal aspect ratio of not greater than 65%, the heavy duty pneumatic tire (2) comprising:
a tread (4);
a pair of sidewalls (6) each connected to an end of the tread (4) and located radially inward of the tread (4);
a pair of beads (8) each located radially inward of the sidewall (6);
a carcass (12) located inward of the tread (4) and the pair of sidewalls (6) and extending on and between one bead (8) and the other bead (8);
a belt (38) located radially inward of the tread (4) and including a large number of belt cords (48) aligned with each other; and
a buffer layer (20) located between the carcass (12) and the belt (38) in a radial direction and formed from a crosslinked rubber, wherein
the buffer layer (20) includes a sheet portion (60) and a pair of hump portions (62) located axially outward of the sheet portion (60), thicker than the sheet portion (60), and integrated with the sheet portion (60),
the belt (38) includes a first belt ply (42A), a second belt ply (42B) located radially outward of the first belt ply (42A), a third belt ply (42C) located radially outward of the second belt ply (42B), and a fourth belt ply (42D) located radially outward of the third belt ply (42C),
the sheet portion (60) is stacked on the carcass (12), and
the first belt ply (42A) is stacked on the sheet portion (60),
**characterized in that**
each of the pair of hump portions (62) has a maximum thickness (b) at an end (38e) of the belt (38), wherein the thickness (b) is measured along an inner surface normal line (NLb) of the tire (2) and
the tread (4) has at least three circumferential grooves (28, 28s, 28m) formed thereon.

2. The heavy duty pneumatic tire (2) according to claim 1, wherein each hump portion (62) has an apparent maximum thickness (TB) of not less than 2.5 mm and not greater than 6.5 mm.

3. The heavy duty pneumatic tire (2) according to claim 1 or 2, wherein the sheet portion (60) has an apparent thickness (TA) of not less than 1.7 mm and not greater than 2.3 mm.

4. The heavy duty pneumatic tire (2) according to any one of claims 1 to 3, wherein a ratio (TB/TA) of the apparent maximum thickness (TB) of each hump portion (62) to the apparent thickness (TA) of the sheet portion (60) is not less than 1.1 and not greater than 3.8.

5. The heavy duty pneumatic tire (2) according to any one of claims 1 to 4, wherein a belt cord (48D) included in the fourth belt ply (42D) is a steel cord composed of a single elemental wire (68d).

6. The heavy duty pneumatic tire (2) according to any one of claims 1 to 5, wherein the belt cord (48D) included in the fourth belt ply (42D) has an outer diameter (D4) of not less than 0.6 mm and not greater than 0.8 mm.

7. The heavy duty pneumatic tire (2) according to claim 5 or 6, wherein the belt cord (48D) included in the fourth belt ply (42D) has a breaking load of not less than 1000 N and not greater than 1600 N.

8. The heavy duty pneumatic tire (2) according to any one of claims 1 to 7, wherein
the belt cord (48D) included in the fourth belt ply (42D) is thinner than a belt cord (48C) included in the third belt ply (42C), and
a ratio (D4/D3) of the outer diameter (D4) of the belt cord (48D) included in the fourth belt ply (42D) to an outer diameter (D3) of the belt cord (48C) included in the third belt ply (42C) is not less than 0.40 and not greater than 0.60.

## Patentansprüche

1. Schwerlast-Luftreifen (2) mit einem nominellen Aspektverhältnis von nicht mehr als 65 %, wobei der Schwerlast-Luftreifen (2) umfasst:
eine Lauffläche (4);
ein Paar Seitenwände (6), die jeweils mit einem Ende der Lauffläche (4) verbunden sind und radial innen von der Lauffläche (4) angeordnet sind;
ein Paar Wülste (8), die jeweils radial innen von der Seitenwand (6) angeordnet sind;
eine Karkasse (12), die innen von der Lauffläche (4) und dem Paar Seitenwände (6) angeordnet ist und sich auf und zwischen einem Wulst (8) und dem anderen Wulst (8) erstreckt;
einen Gürtel (38), der radial innen von der Lauffläche (4) angeordnet ist und eine große Anzahl von Gürtelkorden (48) umfasst, die miteinander ausgerichtet sind; und
eine Pufferschicht (20), die zwischen der Karkasse (12) und dem Gürtel (38) in einer radialen Richtung angeordnet ist und aus einem vernetzten Kautschuk gebildet ist, wobei
die Pufferschicht (20) einen Plattenabschnitt (60) und ein Paar Buckelabschnitte (62) umfasst, die axial außen von dem Plattenabschnitt (60) angeordnet sind, dicker als der Plattenabschnitt (60) sind und mit dem Plattenabschnitt (60) integriert sind,
der Gürtel (38) eine erste Gürtellage (42A), eine zweite Gürtellage (42B), die radial außen von der ersten Gürtellage (42A) angeordnet ist, eine dritte Gürtellage (42C), die radial außen von der zweiten Gürtellage (42B) angeordnet ist, und eine vierte Gürtellage (42D) umfasst, die radial außen von der dritten Gürtellage (42C) angeordnet ist,
der Plattenabschnitt (60) auf die Karkasse (12) gestapelt ist, und
die erste Gürtellage (42A) auf den Plattenabschnitt (60) gestapelt ist, **dadurch gekennzeichnet, dass**
jeder des Paars Buckelabschnitte (62) eine maximale Dicke (b) an einem Ende (38e) des Gürtels (38) aufweist, wobei die Dicke (b) entlang einer Innenflächen-Normallinie (NLb) des Reifens (2) gemessen ist, und
die Lauffläche (4) mindestens drei daran ausgebildete Umfangsrillen (28, 28s, 28m) aufweist.

2. Schwerlast-Luftreifen (2) nach Anspruch 1, wobei jeder Buckelabschnitt (62) eine scheinbare maximale Dicke (TB) von nicht kleiner als 2,5 mm und nicht größer als 6,5 mm aufweist.

3. Schwerlast-Luftreifen (2) nach Anspruch 1 oder 2, wobei der Plattenabschnitt (60) eine offenbare Dicke (TA) von nicht kleiner als 1,7 mm und nicht größer als 2,3 mm aufweist.

4. Schwerlast-Luftreifen (2) nach einem der Ansprüche 1 bis 3, wobei ein Verhältnis (TB/TA) der scheinbaren maximalen Dicke (TB) jedes Buckelabschnitts (62) zu der offenbaren Dicke (TA) des Plattenabschnitts (60) nicht kleiner als 1,1 und nicht größer als 3,8 ist.

5. Schwerlast-Luftreifen (2) nach einem der Ansprüche 1 bis 4, wobei ein Gürtelkord (48D), der in der vierten Gürtellage (42D) enthalten ist, ein Stahlkord ist, der aus einem einzelnen elementaren Draht (68d) besteht.

6. Schwerlast-Luftreifen (2) nach einem der Ansprüche 1 bis 5, wobei der Gürtelkord (48D), der in der vierten Gürtellage (42D) enthalten ist, einen Außendurchmesser (D4) von nicht kleiner als 0,6 mm und nicht größer als 0,8 mm aufweist.

7. Schwerlast-Luftreifen (2) nach Anspruch 5 oder 6, wobei der Gürtelkord (48D), der in der vierten Gürtellage (42D) enthalten ist, eine Bruchlast von nicht kleiner als 1000 N und nicht größer als 1600 N aufweist.

8. Schwerlast-Luftreifen (2) nach einem der Ansprüche 1 bis 7, wobei
der Gürtelkord (48D), der in der vierten Gürtellage (42D) enthalten ist, dünner als ein Gürtelkord (48C) ist, der in der dritten Gürtellage (42C) enthalten ist, und
ein Verhältnis (D4/D3) des Außendurchmessers (D4) des Gürtelkords (48D), der in der vierten Gürtellage (42D) enthalten ist, zu einem Außendurchmesser (D3) des Gürtelkords (48C), der in der dritten Gürtellage (42C) enthalten ist, nicht kleiner als 0,40 und nicht größer als 0,60 ist.

## Revendications

1. Bandage pneumatique pour service intensif (2) ayant un rapport d'aspect nominal qui n'est pas supérieur à 65 %, le bandage pneumatique pour service intensif (2) comprenant :
une bande de roulement (4) ;
une paire de parois latérales (6), chacune étant connectée à une extrémité de la bande de roulement (4) et située radialement à l'intérieur de la bande de roulement (4) ;
une paire de talons (8), chacun étant situé radialement à l'intérieur de la paroi latérale (6) ;
une carcasse (12) située à l'intérieur de la bande de roulement (4) et de la paire de parois latérales (6) et s'étendant sur et entre un talon (8) et l'autre talon (8) ;
une ceinture (38) située radialement à l'intérieur de la bande de roulement (4) et incluant un grand nombre de câblés de ceinture (48) alignés les uns avec les autres ; et
une couche tampon (20) située entre la carcasse (12) et la ceinture (38) dans une direction radiale et formée à partir d'un caoutchouc réticulé, dans lequel la couche tampon (20) inclut une portion en feuille (60) et une paire de portions en renflement (62) situées axialement à l'extérieur de la portion en feuille (60), plus épaisses que la portion en feuille (60), et intégrées à la portion en feuille (60),
la ceinture (38) inclut une première nappe de ceinture (42A), une deuxième nappe de ceinture (42B) située radialement à l'extérieur de la première nappe de ceinture (42A), une troisième nappe de ceinture (42C) située radialement à l'extérieur de la deuxième nappe de ceinture (42B), et une quatrième nappe de ceinture (42D) située radialement à l'extérieur de la troisième nappe de ceinture (42C),
la portion en feuille (60) est empilée sur la carcasse (12), et
la première nappe de ceinture (42A) est empilée sur la portion en feuille (60),
**caractérisé en ce que**
chacune de la paire de portions en renflement (62) a une épaisseur maximum (b) au niveau d'une extrémité (38e) de la ceinture (38),
l'épaisseur (b) étant mesurée le long d'une ligne normale de surface intérieure (NLb) du pneumatique (2) et
la bande de roulement (4) a au moins trois rainures circonférentielles (28, 28s, 28m) formées sur celle-ci.

2. Bandage pneumatique pour service intensif (2) selon la revendication 1, dans lequel chaque portion en renflement (62) a une épaisseur maximum apparente (TB) qui n'est pas inférieure à 2,5 mm et qui n'est pas supérieure à 6,5 mm.

3. Bandage pneumatique pour service intensif (2) selon la revendication 1 ou 2, dans lequel la portion en feuille (60) a une épaisseur apparente (TA) qui n'est pas inférieure à 1,7 mm et qui n'est pas supérieure à 2,3 mm.

4. Bandage pneumatique pour service intensif (2) selon l'une quelconque des revendications 1 à 3, dans lequel un rapport (TB/TA) de l'épaisseur maximum apparente (TB) de chaque portion en renflement (62) sur l'épaisseur apparente (TA) de la portion en feuille (60) n'est pas inférieur à 1,1 et n'est pas supérieur à 3,8.

5. Bandage pneumatique pour service intensif (2) selon l'une quelconque des revendications 1 à 4, dans lequel un câblé de ceinture (48D) inclus dans la quatrième nappe de ceinture (42D) est un câblé en acier composé d'un fil élémentaire unique (68d).

6. Bandage pneumatique pour service intensif (2) selon l'une quelconque des revendications 1 à 5, dans lequel le câblé de ceinture (48D) inclus dans la quatrième nappe de ceinture (42D) a un diamètre extérieur (D4) qui n'est pas inférieur à 0,6 mm et qui n'est pas supérieur à 0,8 mm.

7. Bandage pneumatique pour service intensif (2) selon la revendication 5 ou 6, dans lequel le câblé de ceinture (48D) inclus dans la quatrième nappe de ceinture (42D) a une charge de rupture qui n'est pas inférieure à 1 000 N et qui n'est pas supérieure à 1 600 N.

8. Bandage pneumatique pour service intensif (2) selon l'une quelconque des revendications 1 à 7, dans lequel
le câblé de ceinture (48D) inclus dans la quatrième nappe de ceinture (42D) est plus mince qu'un câblé de ceinture (48C) inclus dans la troisième nappe de ceinture (42C), et
un rapport (D4/D3) du diamètre extérieur (D4) du câblé de ceinture (48D) inclus dans la quatrième nappe de ceinture (42D) sur un diamètre extérieur (D3) du câblé de ceinture (48C) inclus dans la troisième nappe de ceinture (42C) n'est pas inférieur à 0,40 et n'est pas supérieur à 0,60.
